# EUROPEAN PATENT APPLICATION

(11) **EP 4 269 250 A1**
(43) Date of publication of application: **01.11.2023**
(21) Application number: 23170431.3
(22) Date of filing: 27.04.2023
(51) Int. Cl.: B64D 27/24, B60L 58/27, B64D 27/02

(54) **ELECTRICAL HEATING SYSTEM FOR HYBRID POWERPLANT ELECTRICAL POWER SOURCE**

(30) Priority: 29.04.2022 US 202217733408
(71) Applicant: PRATT & WHITNEY CANADA CORP., Longueuil, Québec J4G 1A1 (CA)
(72) Inventor: WANG, Xi, (01BE5) Longueuil, J4G 1A1 (CA)
(74) Representative: Dehns

(57) **Abstract**

A system (20) for an aircraft includes a rotor (40), a powerplant (32), a battery (52) and a heating system (28). The powerplant (32) is configured to drive rotation of the rotor (40). The powerplant (32) includes a heat engine (36) and an electric machine (34). The battery (52) is electrically coupled with the electric machine (34). The heating system (28) includes an electric heating element (102). The heating system (28) is configured to heat the battery (52) using the electric heating element (102).

## Description

### TECHNICAL FIELD

This disclosure relates generally to an aircraft and, more particularly, to a hybrid powerplant for the aircraft.

### BACKGROUND INFORMATION

An aircraft may include a hybrid powerplant with an electric motor and a gas turbine engine. The electric motor may be powered by an electrical power source with one or more batteries. Various hybrid powerplant systems are known in the art. While these known hybrid powerplant systems have various benefits, there is still room in the art for improvement.

### SUMMARY

According to an aspect of the present invention, a system is provided for an aircraft. This aircraft system includes a rotor, a powerplant, a battery and a heating system. The powerplant is configured to drive rotation of the rotor. The powerplant includes a heat engine and an electric machine. The battery is electrically coupled with the electric machine. The heating system includes an electric heating element. The heating system is configured to heat the battery using the electric heating element.

According to another aspect of the present invention, another system is provided for an aircraft. This aircraft system includes a rotor, a powerplant, a battery and an electric heating element. The powerplant is configured to rotatably drive the rotor. The powerplant includes a heat engine and an electric machine. The electric machine is configurable as an electric motor during a motor mode of operation. The electric machine is configurable as an electric generator during a generator mode of operation. The battery is electrically coupled with the electric machine. The electric heating element is configured to receive electrical power from the electric machine during the generator mode of operation to heat the battery.

According to still another aspect of the present invention, a method is provided for an aircraft system. During this method, a propulsor is driven using a hybrid powerplant during aircraft flight. A temperature of a battery is maintained at or above a threshold during the aircraft flight using an electric heating element.

The battery may be electrically coupled with an electric machine within the hybrid powerplant.

The method may also include providing electrical power to the electric heating element from an electric machine within the hybrid powerplant.

The heating system may be configured to maintain a temperature of the battery at or above a threshold.

The heating system may be configured to heat the battery using the electric heating element during aircraft flight.

The electric machine may be configurable as an electric motor during a motor mode of operation. The electric machine may also or alternatively be configurable as an electric generator during a generator mode of operation.

The electric machine may be configured to receive electrical power from the battery during the motor mode of operation.

The electric machine may be configured to provide electrical power to the battery during the generator mode of operation.

The heating system may be configured to receive electrical power from the electric machine to electrically power the electric heating element.

The electric heating element may be next to and thermally coupled with the battery.

The electric heating element may be integrated within the battery.

The battery may include a battery pack with a plurality of modules. The electric heating element may be between an adjacent pair of the plurality of modules.

The electric heating element may be thermally coupled with the battery through a fluid circuit.

The heating system may also include a second electric heating element. The heating system may be configured to heat the battery using the electric heating element and the second electric heating element.

The aircraft system may also include a geartrain mechanically coupling the heat engine and/or the electric machine to the rotor.

The heat engine may be configured as or otherwise include a gas turbine engine.

The heat engine may be configured as or otherwise include a reciprocating piston internal combustion (IC) engine.

The heat engine may be configured as or otherwise include a rotary internal combustion (IC) engine.

The rotor may be configured as or otherwise include a propulsor rotor.

The aircraft system may also include an aircraft fuselage and a propulsion system nacelle. The battery may be arranged within the aircraft fuselage. The propulsion system nacelle may house the powerplant.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a powerplant system for an aircraft.
FIG. 2 is a schematic illustration of a power source configured with an electric machine, a heating system and a sensor system.
FIGS. 3A-D are schematic illustrations of various arrangements of the heating system configured with the power source.
FIG. 4 is a schematic illustration of a single spool arrangement of the gas turbine engine configured with a fuel source.
FIG. 5 is a schematic illustration of a multi-spool arrangement of the gas turbine engine configured with the fuel source.
FIG. 6 is a schematic illustration of another arrangement of the power source configured with the electric machine, the heating system and the sensor system.
FIGS. 7A-D are schematic illustrations of various additional arrangements of the heating system configured with the power source.
FIG. 8 is a schematic illustration of a powerplant and the power source arranged within a common aircraft structure.
FIG. 9 is a schematic illustration of the powerplant and the power source arranged within discrete aircraft structures.
FIG. 10 is a schematic illustration of the powerplant system with the electric machine and the heat engine in a serial arrangement.

### DETAILED DESCRIPTION

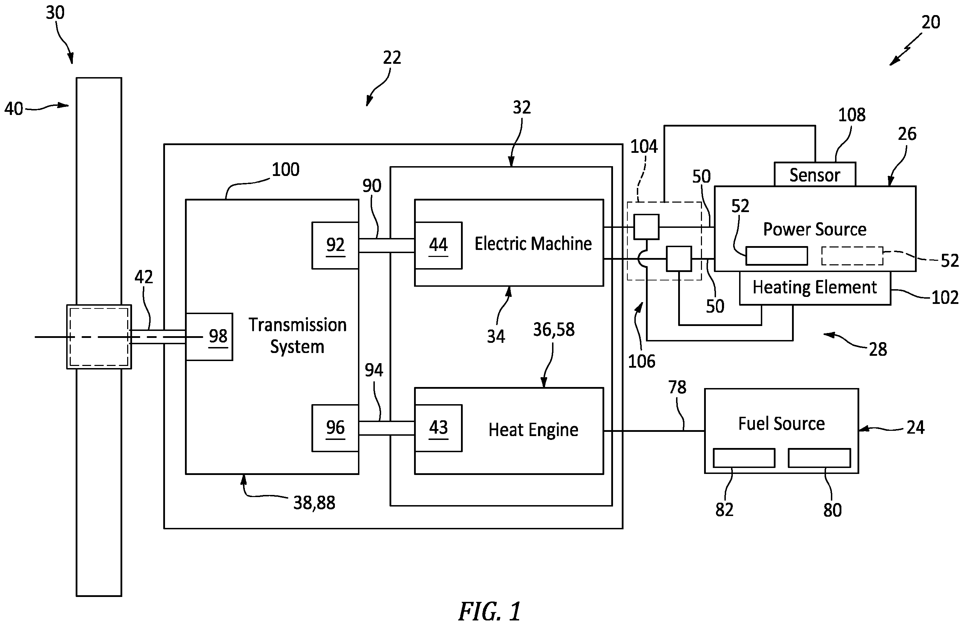

FIG. 1 is a schematic illustration of a powerplant system 20 for an aircraft. This powerplant system 20 / aircraft system includes a powerplant powertrain 22, a (e.g., heat engine) fuel source 24, an (e.g., electric machine) electrical power source 26 and a heating system 28 for the power source 26.

The powertrain 22 includes a mechanical load 30 and a hybrid powerplant 32, which hybrid powerplant 32 includes an electric machine 34 and a heat engine 36. The powertrain 22 of FIG. 1 also includes a power transmission system 38 for transmitting mechanical power from the hybrid powerplant 32 to the mechanical load 30.

The mechanical load 30 may be configured as or otherwise include a rotor 40 mechanically driven by an output shaft 42 and/or another torque transmission device. The mechanical load 30, for example, may be configured as a bladed propulsor rotor of a propulsor for an aircraft propulsion system. Examples of the propulsor rotor include, but are not limited to, a propeller for a propeller engine (e.g., a hybrid turboprop engine), a fan for a ducted fan engine (e.g., a hybrid turbofan engine), and a helicopter rotor (e.g., a main rotor) for a helicopter engine (e.g., a hybrid turboshaft engine). The mechanical load 30 may alternatively be configured as a generator rotor of an electrical power generator where, for example, the hybrid powerplant 32 is configured as a hybrid auxiliary power unit (APU). The present disclosure, however, is not limited to the foregoing exemplary mechanical loads nor the foregoing exemplary hybrid powerplant configurations.

The electric machine 34 may be configurable as an electric motor and/or an electric generator. For example, during a motor mode of operation, the electric machine 34 may operate as the electric motor to convert electricity received from the power source 26 into mechanical power. This mechanical power may be utilized for various purposes within the hybrid powerplant 32 such as, for example, rotating the mechanical load rotor 40 and/or rotating a rotating assembly 43 within the heat engine 36 during heat engine startup. During a generator mode of operation, the electric machine 34 may operate as the electric generator to convert mechanical power received from, for example, the heat engine rotating assembly 43 and/or the mechanical load rotor 40 into electricity. This electricity may be utilized for various purposes within the hybrid powerplant 32 such as, for example, electrically powering one or more electric components of the hybrid powerplant 32 and/or charging the power source 26. The electricity may also or alternatively be utilized for various purposes outside of the hybrid powerplant 32 such as, for example, electrically powering one or more electric components in the aircraft.

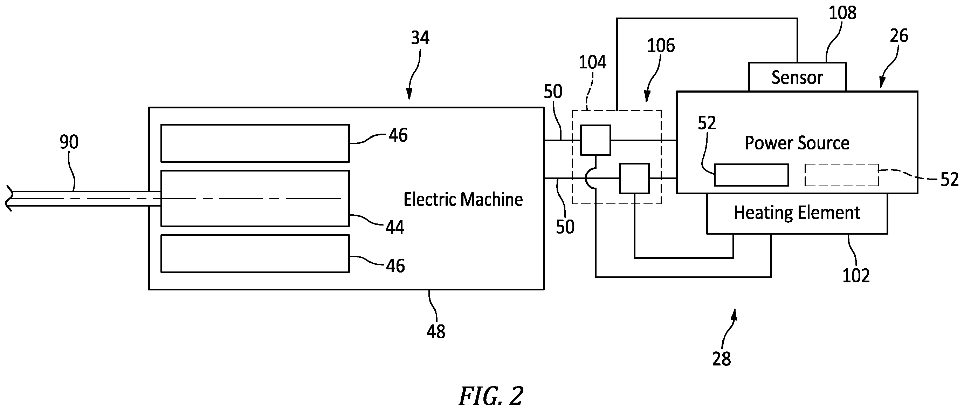

The electric machine 34 of FIG. 2 includes an electric machine rotor 44 and an (e.g., annular) electric machine stator 46, where the machine stator 46 may be radially outboard of and circumscribe the machine rotor 44. The electric machine 34 also includes an electric machine case 48 that at least partially or completely houses the machine rotor 44 and the machine stator 46.

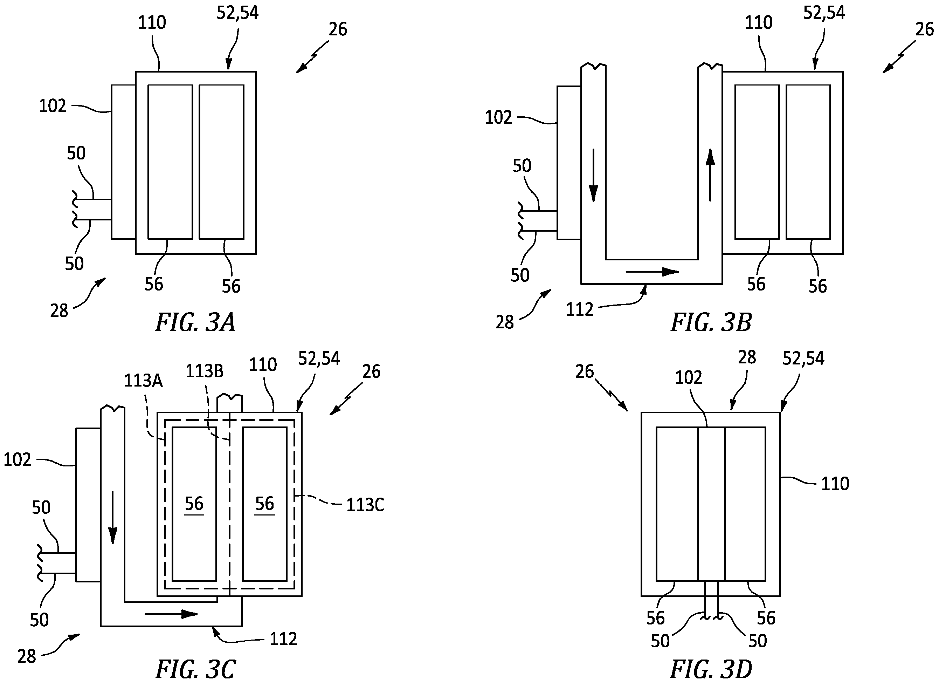

The power source 26 is electrically coupled with the electric machine 34 through one or more electrical leads 50; e.g., high voltage lines. The power source 26 is configured to store electricity. The power source 26 is also configured to provide the stored electricity to the electric machine 34 and/or receive electricity from the electric machine 34; e.g., during recharging. The power source 26, for example, may be configured as or otherwise include a battery 52 (or multiple batteries 52). Referring to FIGS. 3A-D, the battery 52 may be configured as or otherwise include a battery bank 54 with one or more battery modules 56; e.g., battery cells. These modules 56 may be arranged in a stack and electrically coupled to the electrical leads 50 in series or in parallel.

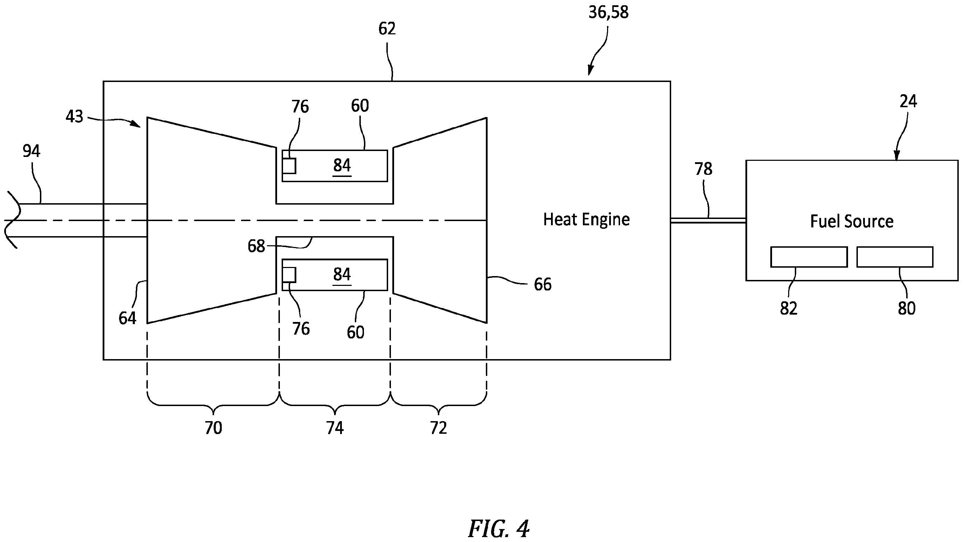

Referring to FIG. 1, the heat engine 36 is configured to convert chemical energy stored within fuel into mechanical power. The heat engine 36 of FIG. 4, for example, is configured as or may otherwise include a gas turbine engine 58. The present disclosure, however, is not limited to such an exemplary heat engine. The heat engine 36, for example, may alternatively be configured as or otherwise include a reciprocating piston internal combustion (IC) engine or a rotary internal combustion (IC) engine. However, for ease of description, the heat engine 36 may be described or referred to herein as the gas turbine engine 58.

The gas turbine engine 58 of FIG. 4 includes the rotating assembly 43, a combustor 60 and an engine case 62 housing the rotating assembly 43 and the combustor 60. The rotating assembly 43 includes a bladed compressor rotor 64, a bladed turbine rotor 66 and a shaft 68 connecting the compressor rotor 64 to the turbine rotor 66. The compressor rotor 64 is arranged in a compressor section 70 of the gas turbine engine 58. The turbine rotor 66 is arranged within a turbine section 72 of the gas turbine engine 58. The combustor 60 is arranged within a combustor section 74 of the gas turbine engine 58.

The fuel source 24 is configured to provide the fuel to the gas turbine engine 58 (the heat engine 36). The fuel source 24 of FIG. 4, for example, is fluidly coupled with one or more fuel injectors 76 of the gas turbine engine 58 through at least (or only) one fuel line 78. The fuel source 24 is also configured to store (e.g., contain a quantity of) the fuel before, during and/or after heat engine operation. The fuel source 24 of FIG. 4, for example, includes a fuel reservoir 80 and a fuel flow regulator 82. The fuel flow regulator 82 may be or otherwise include a pump and/or a valve. This fuel flow regulator 82 is configured to direct fuel received from the fuel reservoir 80 to the fuel injectors 76 through the fuel line 78.

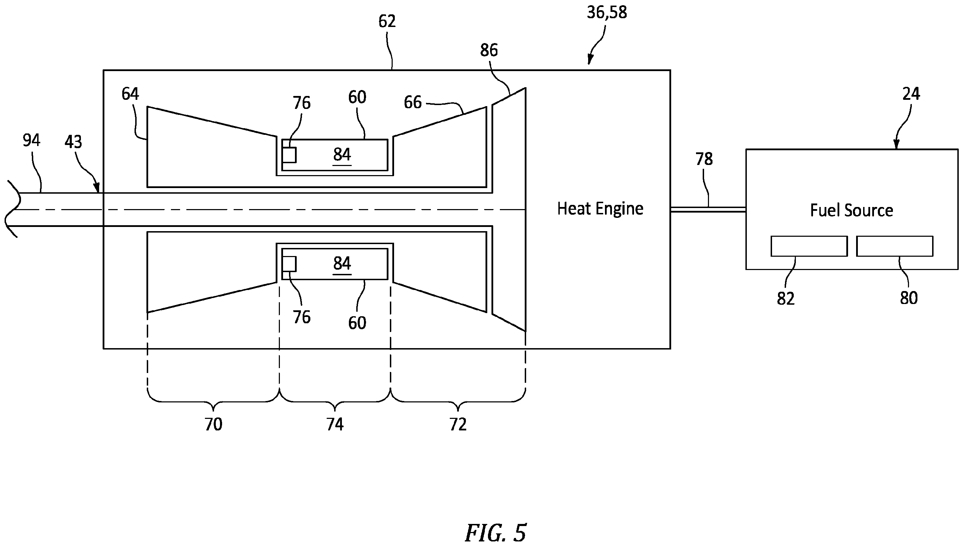

During operation of the gas turbine engine 58 of FIG. 4, air enters a gas path within the gas turbine engine 58 through an airflow inlet. The gas path extends sequentially through the compressor section 70, the combustor section 74 and the turbine section 72. This air is compressed by the compressor rotor 64 and directed into a combustion chamber 84 of the combustor 60. The fuel received by the gas turbine engine 58 from the fuel source 24 is injected into the combustion chamber 84 by the fuel injectors 76 and mixed with the compressed air to provide a fuel-air mixture. This fuel-air mixture is ignited and combustion products thereof flow through and cause the turbine rotor 66 to rotate. The rotation of the turbine rotor 66 drives rotation of the compressor rotor 64 and, thus, compression of the air received from the airflow inlet. The rotation of the rotating assembly 43 also provides mechanical power for driving (e.g., rotating) the mechanical load rotor 40 of FIG. 1. The gas turbine engine 58 of the present disclosure, however, is not limited to such an exemplary configuration. For example, referring to FIG. 5, the gas turbine engine 58 may also include a free turbine 86 (e.g., a power turbine) that provides the mechanical power for driving the mechanical load rotor 40 of FIG. 1.

The transmission system 38 of FIG. 1 may be configured as or otherwise include a geartrain 88. This geartrain 88 is configured to motively couple / operatively connect the electric machine 34 and the heat engine 36 to the mechanical load 30 and its rotor 40. An electric machine coupler 90 (e.g., a shaft), for example, rotatably couples the electric machine 34 and its machine rotor 44 (e.g., see also FIG. 2) to a first component 92 of the geartrain 88; e.g., a gear, a carrier, a shaft, etc. A heat engine coupler 94 (e.g., a shaft) rotatably couples the heat engine 36 and its rotating assembly 43 (e.g., see also FIGS. 4 and 5) to a second component 96 of the geartrain 88; e.g., a gear, a carrier, a shaft, etc. The output shaft 42 rotatably couples the mechanical load rotor 40 to a third component 98 of the geartrain 88; e.g., a gear, a carrier, a shaft, etc. These geartrain components 92, 96 and 98 are arranged together within a geartrain case 100 such that mechanical power may be transmitted through the transmission system 38, its geartrain 88 and geartrain components 92, 96 and 98, for example: (1) from the electric machine 34 to the mechanical load 30 and its rotor 40; (2) from the heat engine 36 to the mechanical load 30 and its rotor 40; (3) from the heat engine 36 to the electric machine 34; and/or (4) from the electric machine 34 to the heat engine 36.

The heating system 28 is configured heat the power source 26 and, more particularly, its battery 52 (or batteries 52). The heating system 28 of FIG. 2, for example, includes an electric heating element 102 and a controller 104 (e.g., switch(s), a current regulator(s), etc.), where the battery 52 is directly or indirectly thermally coupled with the electric heating element 102. The electric heating element 102 may be configured as or otherwise include an electric coil and/or another heat producing electric resistor. The electric heating element 102 is electrically coupled with a power distribution system 106 for the hybrid powerplant 32, which power distribution system 106 electrically couples various electrical aircraft components together including, but not limited to, the system components 26 and 34. The electric heating element 102 of FIG. 2, for example, is electrically coupled to the electric machine 34 (e.g., when operating as the electric generator) through the controller 104. The controller 104 may thereby selectively control (e.g., turn on, turn off or otherwise regulate) a flow of electrical power (e.g., electrical current) from the power distribution system 106 (e.g., the electric machine 34) to the electric heating element 102. The electric heating element 102 may convert the received electrical power into thermal energy for heating the battery 52.

During aircraft flight, the power source 26 and its battery 52 may be subject to relatively cold ambient conditions; e.g., particularly where the aircraft is flying through cold weather and/or at a relatively high altitude. Such cold ambient conditions may cool the battery 52 to a relatively cold temperature at which battery performance may degrade and/or the battery 52 may begin to lose its electrical charge. The battery 52 may thereby not be ready for immediate use and/or optimum performance when needed, for example, to power the electric machine 34 and/or various other aircraft electrical systems.

The heating system 28 is configured to maintain a temperature of the battery 52 at or above a temperature threshold. The heating system 28, for example, may maintain a temperature of the battery 52 within a temperature range; e.g., between a lower (e.g., minimum) temperature threshold and an upper (e.g., maximum) temperature threshold. The heating system 28 may maintain or otherwise regulate battery temperature selectively during the aircraft flight and/or hybrid powerplant operation (e.g., when the battery 52 is not being used, when the battery 52 is not charging, when the aircraft is at a high altitude and/or at aircraft cruise) or throughout the aircraft flight and/or hybrid powerplant operation.

The controller 104 may be in signal communication with a sensor system. The sensor system of FIG. 2 includes a sensor 108 (or sensors) arranged with the power source 26 and its battery 52. The controller 104 may receive sensor data from the sensor 108, which the sensor data is indicative of a temperature of the environment in which the battery 52 is stored and/or a temperature of the battery 52. The controller 104 may use this sensor data to control the flow of the electrical power to the electric heating element 102. For example, where the temperature of the battery 52 is at, close to or dips below its lower temperature threshold (or is predicted to be at, close to or dip below the lower temperature threshold), the controller 104 may direct (e.g., flow) the electrical power to the electric heating element 102 to heat the battery 52 until the temperature of that battery 52 is at, close to or rises above the upper temperature threshold (or is predicted to be at, close to or rise above the upper temperature threshold). This heated (e.g., temperature maintained) power source 26 / battery 52 may thereby remain ready for rapid (e.g., immediate) use and/or elevated (e.g., optimum) performance when needed.

The heating system 28 may be operated when the battery 52 is dormant. The heating system 28, for example, may control the temperature of the battery 52 when there is no (or very little) electrical power flowing into (e.g., charging) or out of (e.g., draining) the battery 52. Under such operation, the heating system 28 may input all (or substantially all) of the heat energy used for regulating the battery temperature. The heating system 28 may also or alternatively be operated when the battery 52 is active. The heating system 28, for example, may regulate the temperature of the battery 52 when electrical power is flowing into (e.g., charging) or out of (e.g., draining) the battery 52. When the battery 52 is charging, the flow of the electrical power into the battery 52 may contribute to the heating of the battery 52.

In some embodiments, referring to FIGS. 3A-C, the electric heating element 102 may be disposed outside of the battery 52. The electric heating element 102 of FIG. 3A, for example, is disposed next to the battery 52. More particularly, the electric heating element 102 may be mounted on / to a side of a case 110 (e.g., a module housing) in which the battery modules 56 are contained. This electric heating element 102 is thermally coupled with any one or more or all of the battery modules 56 through the battery case 110. In another example, referring to FIGS. 3B and 3C, the electric heating element 102 is thermally coupled to the battery 52 and its battery modules 56 through a (e.g., heating and/or cooling) fluid circuit 112. The electric heating element 102, for example, may be located remote from the battery 52. During operation, the electric heating element 102 transfers heat energy into (e.g., heats) fluid flowing through the fluid circuit 112, where the fluid may be a liquid and/or a gas. The heated fluid subsequently transfers heat energy into (e.g., heats) any one or more or all of the battery modules 56 (A) indirectly, for example, through the battery case 110 (see FIG. 3B) and/or (B) directly where the fluid circuit 112 includes one or more segments 113A-C (generally referred to as "113") within the battery case 110 (see FIG. 3C) and, for example, around and/or between the battery modules 56. This fluid circuit 112 may also be utilized for cooling the power source 26 and its battery 52 during other modes of operation; e.g., when the battery 52 is being rapidly charged by the electric machine 34 or another power source 26.

In some embodiments, referring to FIG. 3D, the electric heating element(s) 102 may be disposed within (e.g., integrated into) the battery 52. The electric heating element 102 of FIG. 3D, for example, is located within the battery 52 and its battery case 110. The electric heating element 102 may be next to (e.g., on / to a side of) and thermally coupled with one or more of the battery modules 56. The electric heating element 102 of FIG. 3D, for example, is disposed laterally between an adjacent (e.g., neighboring) pair of the battery modules 56 within the battery 52.

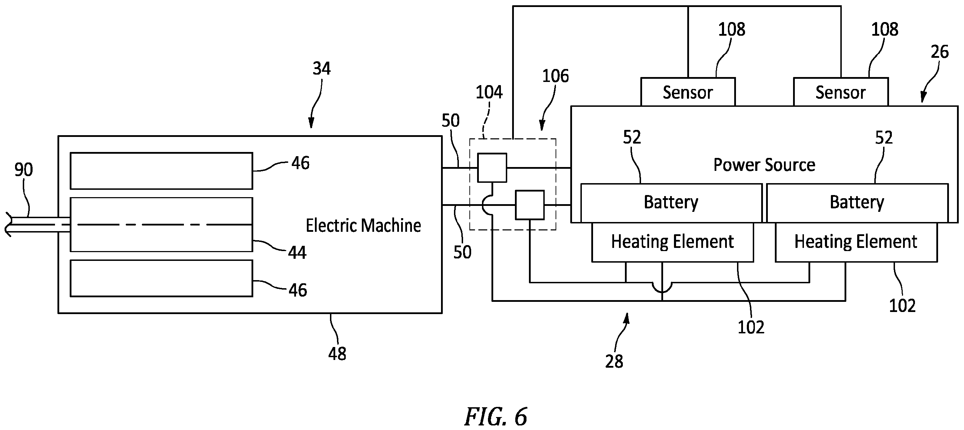

In some embodiments, referring to FIG. 2, the power source 26 may include a single battery 52 (without optional dashed line battery). In other embodiments, referring to FIG. 6, the power source 26 may include a plurality of the batteries 52. Each of these batteries 52 may be configured with a respective electric heating element 102 for controlling the temperature of that respective battery 52.

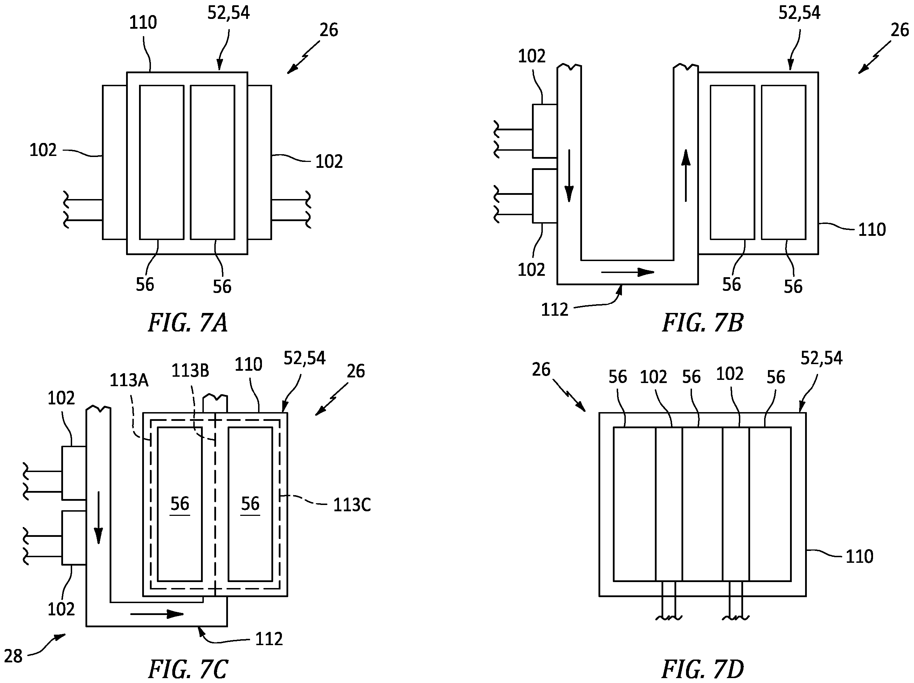

In some embodiments, referring to FIGS. 3A-D, each battery 52 may be associated with a single electric heating element 102. In other embodiments, referring to FIGS. 7A-D, each battery 52 may be associated with a plurality of the electric heating elements 102.

In some embodiments, the battery modules 56 (and optionally the electric heating element(s) 102) may be disposed within the battery case 110 without insulation. In other embodiments, the battery modules 56 (and optionally the electric heating element(s) 102) may be disposed within the battery case 110 with insulation. This insulation may extend about an outer periphery of the stack of battery modules 56. The insulation may also or alternatively extend about an outer periphery of the battery case 110 (and optionally the electric heating element(s) 102).

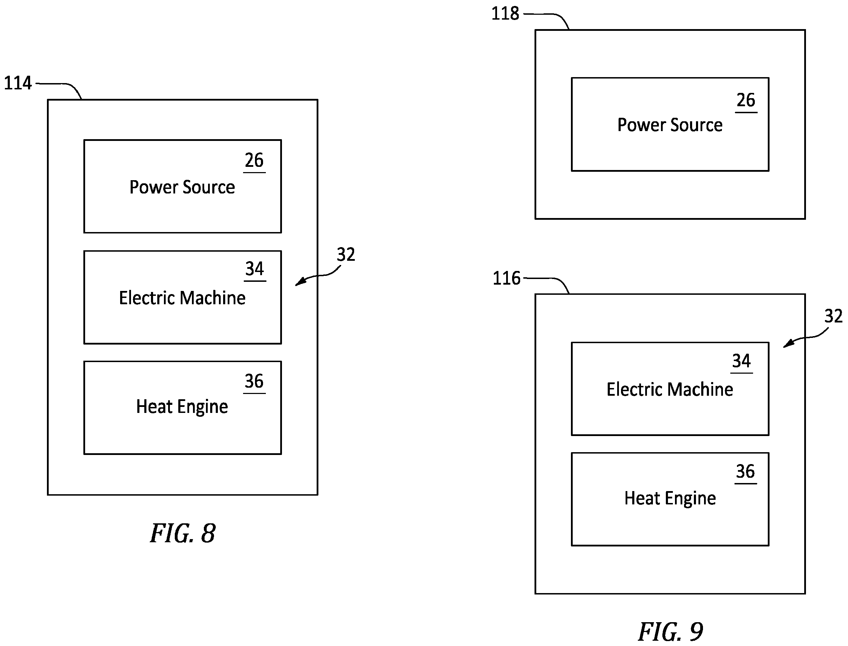

In some embodiments, referring to FIG. 8, the hybrid powerplant 32 and the power source 26 may be arranged / contained within a common housing 114. In other embodiments, referring to FIG. 9, the hybrid powerplant 32 may be remotely located from the power source 26. The hybrid powerplant 32 of FIG. 9, for example, is housed within a first component / structure 116 of the aircraft; e.g., a propulsion system nacelle. The power source 26 of FIG. 9 is housed within a second component / structure 118 of the aircraft; e.g., an aircraft wing or an aircraft fuselage.

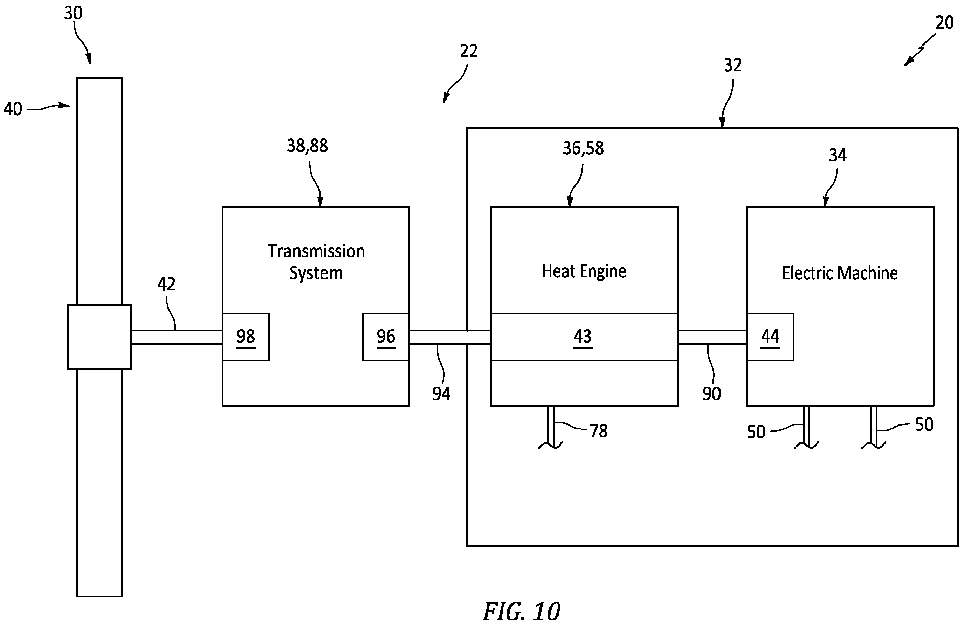

In some embodiments, referring to FIG. 1, the electric machine 34 and the heat engine 36 may be configured in parallel to drive the mechanical load 30 and its rotor 40 through the transmission system 38 and its geartrain 88. In other embodiments, referring to FIG. 10, the electric machine 34 and the heat engine 36 may be configured in series to drive the mechanical load 30 and its rotor 40. The mechanical load 30 and its rotor 40 of FIG. 10, for example, is operably coupled to the electric machine 34 serially through the transmission system 38 / the geartrain 88 and the heat engine 36. The present disclosure, however, is not limited to such an exemplary arrangement.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A system (20) for an aircraft, comprising:
a rotor (40);
a powerplant (32) configured to drive rotation of the rotor (40), the powerplant (32) including a heat engine (36) and an electric machine (34);
a battery (52) electrically coupled with the electric machine (34); and
a heating system (28) comprising an electric heating element (102), the heating system (28) configured to heat the battery (52) using the electric heating element (102).

2. The system (20) of claim 1, wherein the heating system (28) is configured to maintain a temperature of the battery (52) at or above a threshold.

3. The system (20) of claim 1 or 2, wherein the heating system (28) is configured to heat the battery (52) using the electric heating element (102) during aircraft flight.

4. The system (20) of claim 1, 2 or 3, wherein the electric machine (34) is configurable as at least one of:
an electric motor during a motor mode of operation, wherein, optionally, the electric machine (34) is configured to receive electrical power from the battery (52) during the motor mode of operation; and
an electric generator during a generator mode of operation, wherein, optionally, the electric machine (34) is configured to provide electrical power to the battery (52) during the generator mode of operation.

5. The system (20) of any preceding claim, wherein the heating system (28) is configured to receive electrical power from the electric machine (34) to electrically power the electric heating element (102).

6. The system (20) of claim 1, wherein the electric heating element (102) is next to and thermally coupled with the battery (52).

7. The system (20) of any of claims 1 to 5, wherein the electric heating element (102) is integrated within the battery (52), and/or wherein the battery (52) comprises a battery pack (54) with a plurality of modules (56) and the electric heating element (102) is between an adjacent pair of the plurality of modules (56).

8. The system (20) of any of claims 1 to 6, wherein the electric heating element (102) is thermally coupled with the battery (52) through a fluid circuit (112).

9. The system (20) of any preceding claim, wherein
the heating system (28) further comprises a second electric heating element (102); and
the heating system (28) is configured to heat the battery (52) using the electric heating element (102) and the second electric heating element (102).

10. The system (20) of any preceding claim, further comprising a geartrain (88) mechanically coupling at least one of the heat engine (36) and the electric machine (34) to the rotor (40).

11. The system (20) of any preceding claim, wherein the heat engine (36) comprises a gas turbine engine (58), and/or the rotor (40) comprises a propulsor rotor.

12. The system (20) of any preceding claim, further comprising:
an aircraft fuselage, the battery (52) arranged within the aircraft fuselage; and
a propulsion system nacelle housing the powerplant (32).

13. A method for an aircraft system (20), the method comprising:
driving a propulsor using a hybrid powerplant (32) during aircraft flight; and
maintaining a temperature of a battery (52) at or above a threshold during the aircraft flight using an electric heating element (102).

14. The method of claim 13, wherein the battery (52) is electrically coupled with an electric machine (34) within the hybrid powerplant (32).

15. The method of claim 13 or 14, further comprising providing electrical power to the electric heating element (102) from an electric machine (34) within the hybrid powerplant (32).
